(19) **Europäisches Patentamt** / **European Patent Office** / **Office européen des brevets**

(11) **EP 3 161 460 B1**

## (12) FASCICULE DE BREVET EUROPEEN

(45) Date de publication et mention
de la délivrance du brevet:
**15.01.2020 Bulletin 2020/03**

(21) Numéro de dépôt: **15742348.4**

(22) Date de dépôt: **25.06.2015**

(51) Int Cl.:
*G01N 23/20* (2018.01)      *G01N 23/201* (2018.01)
*G01N 23/087* (2018.01)

(86) Numéro de dépôt international:
**PCT/FR2015/051713**

(87) Numéro de publication internationale:
**WO 2016/001535 (07.01.2016 Gazette 2016/01)**

(54) **PROCÉDÉ D'ANALYSE D'UN OBJET EN DEUX TEMPS UTILISANT UN SPECTRE EN TRANSMISSION PUIS UN SPECTRE EN DIFFUSION**

VERFAHREN ZUR ANALYSE EINES OBJEKTS IN ZWEI STUFEN MIT EINEM ÜBERTRAGUNGSSPEKTRUM GEFOLGT VON EINEM STREUUNGSSPEKTRUM

METHOD FOR ANALYSING AN OBJECT IN TWO STAGES USING A TRANSMISSION SPECTRUM FOLLOWED BY A SCATTER SPECTRUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2014 FR 1456212**

(43) Date de publication de la demande:
**03.05.2017 Bulletin 2017/18**

(73) Titulaire: **Commissariat à l'Energie Atomique et aux Energies
Alternatives
75015 Paris (FR)**

(72) Inventeurs:
• **PAULUS, Caroline**
  **38000 Grenoble (FR)**
• **TABARY, Joachim**
  **38600 Fontaine (FR)**

(74) Mandataire: **Santarelli
49, avenue des Champs-Elysées
75008 Paris (FR)**

(56) Documents cités:
**WO-A1-2006/075296      WO-A1-2007/068933
US-A- 5 974 111      US-A1- 2006 115 044
US-A1- 2006 140 340**

**Description**

La présente invention concerne un procédé d'analyse d'un objet par diffractométrie, et un système de détection associé.

La diffractométrie correspond à l'irradiation d'un matériau ou objet à l'aide d'une source de rayonnement électromagnétique, de type X ou gamma, suivie de l'analyse du rayonnement de diffusion élastique à faible angle. L'expression « rayonnement de diffusion élastique à faible angle » désigne le rayonnement diffusé par le matériau ou objet, de manière cohérente, selon un angle inférieur à 15°, voire même inférieur à 10°, par rapport à la direction du rayonnement incident au matériau ou objet. Au-delà en 10°, en effet, la diffusion élastique, ou diffusion Rayleigh, devient progressivement négligeable. Il est connu d'utiliser la diffractométrie pour détecter certaines substances cristallines telles que la plupart des explosifs ou de nombreuses autres structures dangereuses ou illégales.

L'invention trouve ainsi une application dans le domaine de la sécurité, plus particulièrement dans le domaine de la détection de matériaux explosifs dans un bagage.

Elle est également utile dans le domaine médical, par exemple, pour la localisation d'une tumeur dans un sein. En effet, une publication de l'UCL (Pani, S. et al. « Characterization of breast tissue using energy-dispersive X-ray diffraction computed tomography ». Applied Radiation and Isotopes 68, n° 10 (2010) : 1980-1987) a pu démontrer la possibilité de différencier (tissus adipeux, fibreux, tumeurs bénignes, adénofibromes, carcinomes...) des objets de tissus biologiques issus de biopsies du sein grâce à la mesure en diffusion de ces tissus.

L'analyse du rayonnement diffusé selon un angle faible (à noter que le terme « diffracté » est généralement utilisé pour un matériau cristallin tandis que le terme « diffusé » est généralement utilisé pour un matériau amorphe, mais ces deux termes sont ici indifféremment utilisés, de même que les termes diffusion et diffraction) par un matériau est une méthode d'analyse physico-chimique qui fournit des informations sur la structure de la matière permettant ainsi une meilleure caractérisation des matériaux.

Il est connu que l'analyse du spectre du rayonnement diffusé à faible angle, ou spectre de diffusion, permet d'établir une signature du matériau examiné.

Pour les matériaux cristallins par exemple, lorsque la longueur d'onde des rayons X irradiants est du même ordre de grandeur que les distances inter-réticulaires (quelques angströms), les rayons diffusés génèrent des interférences constructives ou destructives selon leur énergie et leur angle de diffusion. Les conditions pour lesquelles les interférences sont constructives sont déterminées par la loi de Bragg. Pour un matériau cristallin, cette loi lie la distance inter-réticulaire, l'énergie du rayonnement diffusé et l'angle de diffusion, selon l'équation suivante :

$$E_{hkl} = n \frac{hc}{2 d_{hkl} \sin(\theta/2)}$$

Avec :

$d_{hkl}$ : distance inter-réticulaire entre les plans cristallographiques du cristal irradié ;
$\{hkl\}$ : indices de Miller ;
$\theta$ : angle de diffusion, c'est-à-dire l'angle formé entre le rayonnement diffusé analysé et le faisceau incident au cristal irradié ;
$h$ : constante de Planck ;
$c$ : vitesse de la lumière ;
$n$ : l'ordre de l'interférence.

On peut repérer les pics de Bragg par le transfert de quantité de mouvement défini par l'équation suivante :

$$x = \frac{\sin(\theta/2)}{\lambda} = \frac{n}{2 d_{hkl}}$$

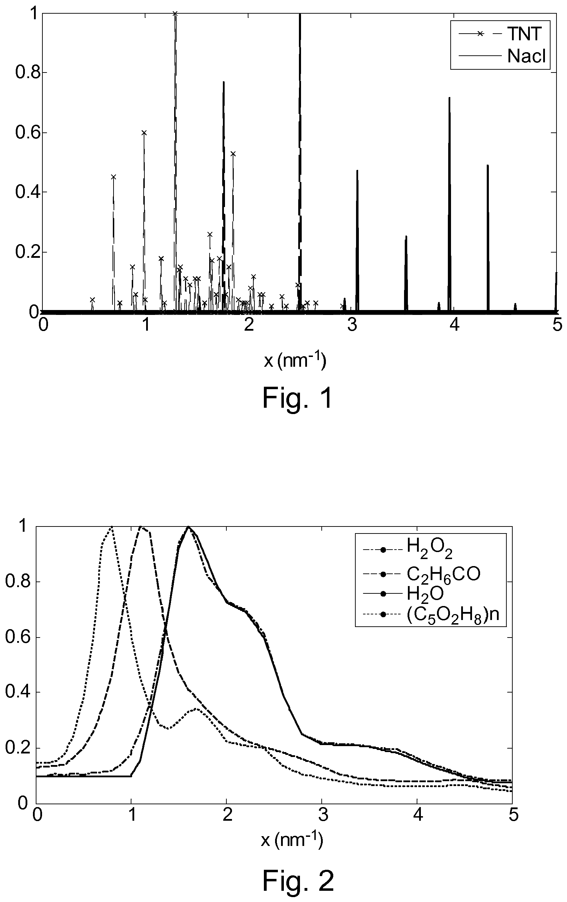

L'intérêt d'exprimer les profils de diffusion (intensité mesurée) en fonction de $x$ est dû au fait qu'un pic d'intensité peut être mesuré pour différents couples $(\lambda, \theta)$ mais pour une seule valeur de $x$ ($n$ fixe). A titre d'exemples, la figure 1 annexée montre les pics de Bragg de deux cristaux, à savoir le TNT (trinitrotoluène) et le sel (NaCl).

Dans le cas de matériaux non cristallins, le spectre de diffusion à angle faible est également représentatif du matériau examiné.

A l'instar des interférences déterminées par la loi de Bragg pour un matériau cristallin, des phénomènes d'interférence peuvent également se produire entre les atomes et/ou molécules d'un matériau amorphe tel qu'un liquide, faisant cette fois intervenir une distribution continue de distances (fonction d'interférence moléculaire, notée FIM). En effet, beaucoup de matériaux amorphes ont des arrangements réguliers sur des distances nanométriques (on parle d'ordre à courte distance). Ce type d'ordre est déterminé par des liaisons chimiques fortes pour les liaisons covalentes et ioniques. Cet ordre à courte distance provoque des interférences intramoléculaires et intermoléculaires. La figure 2 annexée illustre des exemples de fonctions d'interférence moléculaire, à savoir la FIM normalisée de l'eau ($H_2O$), la FIM normalisée de l'eau oxygénée ($H_2O_2$), la FIM normalisée de l'acétone($C_2H_6CO$), et la FIM normalisée d'un matériau connu sous le nom commercial plexiglas® (($C_5O_2H_8$)n).

Les diffractomètres les plus courants sont dits à dispersion angulaire ADXRD (acronyme anglais de « *Angular Dispersive X-ray Diffraction* »). L'énergie est fixée par l'utilisation d'un rayonnement monochromatique et le nombre de photons diffractés est mesuré en fonction de l'angle. Bien que ces dispositifs soient très précis, ils nécessitent l'utilisation d'une source monochromatique puissante et ne peuvent être utilisés pour l'imagerie du fait de leur encombrement.

Développée plus récemment, la technique EDXRD (acronyme anglais de *« Energy Dispersive X-Ray Diffraction »*) permet de pallier ces difficultés. Elle consiste cette fois à travailler à angle fixe en utilisant un ensemble de collimateurs et à illuminer l'objet avec un faisceau polychromatique pour mesurer les photons diffractés avec un détecteur spectrométrique résolu en énergie. Les pics de diffraction apparaissent alors à certaines énergies dans le spectre mesuré.

La technique EDXRD, et de façon plus générale, toute technique d'analyse par spectrométrie, nécessite la mise en œuvre d'un détecteur spectrométrique suffisamment résolu en énergie pour permettre la séparation et l'identification des différents pics caractéristiques du matériau constitutif de l'objet à analyser. Les détecteurs connus présentant la meilleure résolution en énergie sont du type Germanium. Mais ce type de détecteur doit être refroidi à des températures très faibles, par des procédés complexes et/ou coûteux (refroidissement thermoélectrique ou par un réservoir d'azote liquide). Aussi, les dispositifs d'analyse mettant en œuvre un tel détecteur sont très encombrants.

L'émergence récente de détecteurs spectrométriques pouvant être utilisés à température ambiante, tels des détecteurs de type CdTe, CdZnTe, ou des matériaux scintillateurs, offre une alternative intéressante aux détecteurs Germanium. En effet, ces détecteurs sont compacts, non refroidis et moins onéreux. Cependant, leurs performances en termes de résolution en énergie sont encore obtenues avec les détecteurs Germanium, bien que correctes.

Pour savoir si une substance cristalline ou amorphe donnée est contenue dans un objet, il est donc connu de :

✓ irradier l'objet à l'aide d'un faisceau incident, émis par une source de rayonnement ionisant, de préférence collimaté par un collimateur primaire,
✓ capter le rayonnement diffracté à l'aide d'un dispositif de détection comprenant

♦ un détecteur, dit détecteur spectrométrique, apte à établir un spectre en énergie (ou spectre énergétique) du rayonnement diffusé selon un angle de diffusion donné, c'est-à-dire un détecteur comprenant

○ un matériau détecteur apte à interagir avec un rayonnement diffusé par l'objet et qui présente, du côté de l'objet, un plan dit plan de détection,
○ des moyens de mesure spectrométrique, aptes à mesurer une énergie libérée par chaque interaction d'un photon avec le matériau détecteur et à établir au moins un spectre en énergie.

♦ un collimateur, dit collimateur de détection, associé au détecteur, le détecteur et le collimateur de détection étant agencés de façon à présenter un axe de détection D formant, avec l'axe central Z du faisceau incident, un angle de diffusion θ,

✓ analyser le ou les spectres mesurés par comparaison avec le spectre en énergie de la substance recherchée.

D'une façon générale, un spectre en énergie illustre la distribution de l'énergie d'un rayonnement sous la forme d'un histogramme représentant le nombre d'interactions de photon dans l'objet (en ordonnée) en fonction de l'énergie libérée (en abscisse). Souvent, l'axe des énergies est discrétisé en canaux de largeur $2\,\delta E$, un canal $C_i$, centré sur l'énergie $E_i$ correspondant aux énergies comprises entre $E_i-\delta E$ et $E_i+\delta E$.

On sait que l'identification d'un matériau par élaboration puis analyse d'un spectre de diffusion peut-être fastidieuse lorsqu'on souhaite caractériser des objets de volume important. En effet, cette méthode est d'autant plus précise que le volume d'objet observé est faible.

Par ailleurs, on connaît de WO 2007/068933 un dispositif particulièrement complexe comprenant : un convoyeur ; une source de rayons X annulaire à points d'émission multiples ; un détecteur annulaire placé en transmission pour la détection de rayonnements transmis par l'objet, comprenant autant de détecteurs ponctuels diamétralement opposés aux points d'émission de la source ; une série de détecteurs annulaires en diffraction, à résolution énergétique, se succédant le long de la direction XX, chaque détecteur annulaire en diffraction étant formé par une pluralité de détecteurs ponctuels répartis autour de l'objet. Ce dispositif permet de reconstruire des images 2D et 3D de l'objet analysé et de classifier l'objet, au terme d'un long processus d'analyse, en fonction du risque que celui-ci représente.

Enfin, on connaît de WO 2006/075296 un dispositif et un procédé d'identification de matériaux comprenant une source polychromatique de rayons X, un détecteur adapté pour détecter des rayonnements diffusés (ou diffractés) et des rayonnements transmis par l'objet analysé, et une unité de calcul pour :

- reconstruire une image de l'objet par tomographie à partir des rayonnements transmis, et comparer cette image de transmission avec des images de référence pour déterminer s'il existe une région suspecte dans l'objet analysé,
- déterminer une première section efficace différentielle de diffusion cohérente correspondant à un premier transfert de quantité de mouvement des rayonnements diffusés détectés pour une région suspecte, et comparer cette première section efficace différentielle à une première valeur correspondant à des matériaux recherchés,
- déterminer une seconde section efficace différentielle de diffusion cohérente correspondant à un second transfert de quantité de mouvement des rayonnements diffusés détectés pour la région suspecte, et comparer cette seconde section efficace différentielle à une deuxième valeur correspondant aux matériaux recherchés,
- déterminer une section efficace totale pour la région suspecte en sommant les première et seconde sections efficaces différentielles, et comparer cette section efficace totale à une troisième valeur correspondant aux matériaux recherchés.

La longueur d'exécution du procédé de WO 2006/075296 le rend incompatible avec certaines applications telles que la recherche de produits explosifs ou dangereux dans des bagages.

L'invention vise à pallier ces inconvénients, en proposant notamment un procédé d'analyse d'un objet plus rapide et plus efficace.

Pour ce faire, l'invention propose un procédé d'analyse d'un objet caractérisé en ce qu'il se déroule en deux parties, à savoir une première partie comprenant les étapes suivantes :

✓ irradiation de l'objet par un rayonnement photonique incident,
✓ acquisition d'un unique spectre énergétique transmis par l'objet selon l'axe du rayonnement incident, dit spectre en transmission mesuré, à l'aide d'un détecteur spectrométrique placé en transmission,
✓ détermination d'au moins une première caractéristique d'un matériau constitutif de l'objet à partir du spectre en transmission mesuré,
✓ vérification de la réalisation d'au moins un critère, dit critère de suspicion, portant sur la première caractéristique de l'objet et traduisant le fait que l'objet contient un matériau potentiellement suspect eu égard à l'application considérée. Ainsi par exemple, dans le cas d'une application relevant du domaine de la sécurité telle que la recherche d'explosifs dans des bagages, le critère de suspicion traduit le fait que l'objet contient un matériau potentiellement dangereux, c'est-à-dire un matériau dont la première caractéristique s'approche de celle d'un matériau explosif. Dans le cas d'une application médicale telle que la recherche d'une tumeur dans un sein, le critère de suspicion traduit le fait que l'objet contient un matériau potentiellement malin, c'est-à-dire un matériau dont la première caractéristique est proche de celle d'un tissu cancéreux. L'invention consiste donc à utiliser un critère de suspicion comprenant au moins une plage de valeurs prédéfinie contenant des valeurs de la première caractéristique correspondant à des matériaux recherchés eu égard à l'application considérée, c'est-à-dire une plage de valeurs pour la première caractéristique à l'intérieur de laquelle il est considéré que l'objet est potentiellement suspect eu égard à l'application considérée, et à l'extérieur de laquelle l'objet est considéré comme n'étant pas suspect. La vérification du critère de suspicion comprend alors une étape de comparaison de la première caractéristique telle que précédemment déterminée pour l'objet avec la plage de valeurs prédéfinie.

Le procédé selon l'invention comprend une seconde partie qui est exécutée uniquement lorsque le critère de suspicion est réalisé.

Ainsi, lorsque le critère de suspicion n'est pas réalisé, il est mis fin au procédé d'analyse de l'objet à la fin de la première partie : l'objet en cours d'analyse est considéré comme inoffensif, est déplacé et éventuellement remplacé (dans la zone de réception d'objet du système de détection) par un nouvel objet à analyser.

A l'inverse, lorsque le critère de suspicion est réalisé, la seconde partie est exécutée, laquelle seconde partie comprend :

✓ acquisition d'un spectre énergétique, dit spectre en diffusion mesuré, diffusé par l'objet selon un seul angle de diffusion $\theta$ compris entre 1° et 15° à l'aide d'un détecteur spectrométrique placé en diffusion,
✓ détermination d'une seconde caractéristique de l'objet à partir

- soit du spectre en diffusion mesuré,
- soit du spectre en diffusion mesuré et du spectre en transmission mesuré,

✔ comparaison avec des caractéristiques de matériaux étalons mémorisées dans une base de données,

soit de la seconde caractéristique de l'objet,
soit non seulement de la seconde caractéristique de l'objet mais aussi de la première caractéristique de l'objet,
aux fins d'identification d'un matériau constitutif de l'objet.

En résumé, la définition du procédé fournie ci-dessus couvre quatre cas :

- un premier cas dans lequel

♦ la deuxième caractéristique (par exemple une signature en diffusion) est obtenue à partir du seul spectre en diffusion mesuré, le spectre en transmission ne servant alors que pour éliminer les objets non suspects (dans la première partie du procédé),
♦ la deuxième caractéristique est utilisée seule pour identifier le matériau, la deuxième caractéristique pouvant alors être qualifiée de « signature déterminante » du matériau en ce sens qu'elle permet à elle seule d'identifier de façon fiable et rapide le matériau, comme par exemple une signature en diffusion (Pics de Bragg, Fonction d'interférence Moléculaire),

- un deuxième cas dans lequel

♦ la deuxième caractéristique (par exemple signature en diffusion) est obtenue à partir du spectre en diffusion mesuré et du spectre en transmission mesuré, le spectre en transmission mesuré servant alors à deux reprises, une première fois dans la première partie du procédé pour éliminer les objets non suspects et une deuxième fois dans la deuxième partie du procédé pour la détermination de la deuxième caractéristique par exemple pour améliorer la précision avec laquelle cette deuxième caractéristique est déterminée,
♦ la deuxième caractéristique est utilisée seule pour identifier le matériau, la deuxième caractéristique étant alors une signature déterminante telle que définie supra,

- un troisième cas dans lequel

♦ la deuxième caractéristique (par exemple transferts de quantité de mouvement) est obtenue à partir du seul spectre en diffusion mesuré, le spectre en transmission ne servant alors que pour éliminer les objets non suspects (dans la première partie du procédé),
♦ à la fois la deuxième caractéristique (par exemple transferts de quantité de mouvement) et la première caractéristique (par exemple numéro atomique effectif) sont utilisées pour identifier le matériau.

- un quatrième cas dans lequel

♦ la deuxième caractéristique (par exemple le spectre en diffusion lui-même, ou la position de certains pics de ce spectre en diffusion et éventuellement leur intensité relative) est obtenue à partir du spectre en diffusion mesuré et du spectre en transmission mesuré, le spectre en transmission mesuré servant alors à deux reprises, une première fois dans la première partie du procédé pour éliminer les objets non suspects et une deuxième fois dans la deuxième partie du procédé pour la détermination de la deuxième caractéristique par exemple pour améliorer la précision avec laquelle cette deuxième caractéristique est déterminée,
♦ à la fois la deuxième caractéristique (par exemple le spectre en diffusion) et la première caractéristique (par exemple un coefficient d'atténuation, l'épaisseur d'un matériau constitutif de l'objet) sont utilisées pour identifier le matériau.

A noter qu'il est possible d'utiliser un seul et même détecteur spectrométrique à la fois pour l'acquisition du spectre en transmission dans la première partie du procédé, et pour l'acquisition du spectre en diffusion dans la deuxième partie du procédé. Il convient, dans ce cas, de déplacer le détecteur au cours du procédé, entre les deux positions d'acquisition (position en transmission, sur l'axe du rayonnement incident / position en diffusion, décalée d'un angle θ de cet axe).

En variante, on utilise un système de détection pourvu de deux détecteurs spectrométriques qui ne sont pas destinés à être déplacés, à savoir un détecteur spectrométrique placé en transmission, et un détecteur spectrométrique placé en diffusion.

Avantageusement et selon l'invention, la première caractéristique peut correspondre à une forme géométrique de l'objet ou à une de ces dimensions, comme par exemple son épaisseur suivant l'axe du rayonnement incident. Le fait que le détecteur placé en transmission selon l'invention soit un détecteur spectrométrique rend possible l'estimation, en tant que première caractéristique de l'objet, outre celles citées ci-dessus, d'un coefficient d'atténuation pour une ou plusieurs énergies prédéterminées, ou pour une plage d'énergies donnée, ou encore du numéro atomique effectif $Z_{eff}$ d'un matériau constitutif de l'objet. Il peut également s'agir d'une indication quant à la nature d'un matériau constitutif de l'objet, comme par exemple :

- une famille de matériaux à laquelle appartiendrait le matériau constitutif de l'objet, la seconde partie du procédé permettant alors de préciser au sein de cette famille quelle est la nature exacte du matériau et donc d'affiner l'hypothèse fournie par la première partie,
- une hypothèse sur la nature-même du matériau, la seconde partie du procédé permettant alors de confirmer l'hypothèse fournie par la première étape quant à la nature du matériau,

ces indications étant obtenues à partir de l'analyse du spectre en transmission.

Le numéro atomique effectif $Z_{eff}$ fait partie des paramètres pouvant caractériser un matériau. On rappelle que le numéro atomique d'un corps simple est défini comme le nombre de protons présents dans le noyau d'un atome de ce corps. En revanche, lorsque l'on considère un composé chimique, on doit faire appel à la notion de numéro atomique effectif. Celui-ci est défini comme le numéro atomique d'un corps simple qui conduirait au même spectre de transmission dans une bande d'énergie donnée. De manière générale, le numéro atomique effectif d'un composé chimique est obtenu au moyen d'une combinaison des numéros atomiques des corps simples constitutifs du composé, chaque numéro atomique étant affecté d'un coefficient de pondération dépendant de la fraction massique ou atomique du corps simple dans le composé. Ainsi, en pratique, le numéro atomique effectif $Z_{eff}$ d'un composé de $N$ corps simples, vérifie

$$Z_{eff} = \left( \sum_{i=1}^{N} \eta_i \left( Z_{eff}^i \right)^p \right)^{1/p}$$

où

$$Z_{eff}^i$$

est le numéro atomique du corps simple $i = 1,...,N$ et $p$ est une constante relié à l'effet photoélectrique ($p = 4{,}62$).

Un avantage à déterminer la première caractéristique à partir d'un spectre en transmission mesuré est qu'un tel spectre nécessite un temps d'acquisition et de traitement relativement court comparé à l'acquisition d'un spectre en diffusion et comparé aussi la reconstruction tomographique effectuée dans WO 2006/075296, de sorte que la première partie du procédé selon l'invention, qui ne permet pas d'identifier précisément le matériau mais permet d'éliminer un grand nombre d'objets inoffensifs, est rapide. La deuxième partie du procédé, qui permet une meilleure discrimination du matériau mais qui est plus longue en raison de l'acquisition d'un spectre en diffusion, n'est effectuée que sur les objets suspects. Un gain de temps considérable est ainsi réalisé.

La deuxième caractéristique de l'objet, déterminée à partir au moins d'un spectre en diffusion mesuré, est par exemple une fonction appelée signature en diffusion, qui représente des pics de diffusion (pics de Bragg pour un matériau cristallin ou fonction d'interférence moléculaire pour un matériau amorphe). En variante, il peut s'agir d'une grandeur physique extraite d'une telle signature en diffusion (distance inter-réticulaire pour un matériau cristallin par exemple). La deuxième caractéristique de l'objet peut également être un transfert de quantité de mouvement.

Comme défini précédemment, cette deuxième caractéristique est déterminée à partir au moins du spectre en diffusion mesuré. Dans un mode de réalisation préférentiel, elle est déterminée à partir non seulement du spectre en diffusion mesuré lors de la deuxième partie du procédé mais aussi du spectre en transmission mesuré lors de la première partie procédé.

L'utilisation combinée d'un spectre en diffusion et d'un spectre en transmission pour reconstruire une signature en diffusion d'un matériau est décrite plus en détail plus loin dans le cadre d'un exemple de réalisation de l'invention. Cette combinaison permet d'améliorer l'identification du matériau constitutif de l'objet.

Dans une version préférée, le détecteur spectrométrique placé en diffusion est configuré de façon à présenter un axe de détection formant, avec un axe central du rayonnement incident, un angle de diffusion $\theta$ compris entre 1° et 10° et de préférence entre 1° et 5°.

Dans un mode de réalisation préférentiel, le procédé d'analyse selon l'invention comprend une première étape préalable de calibrage d'une matrice de réponse du détecteur spectrométrique placé en diffusion (laquelle étape de calibrage peut être omise notamment si la réponse du détecteur est jugée satisfaisante, c'est-à-dire si la résolution en énergie du détecteur utilisé est particulièrement bonne), une deuxième étape préalable de calibrage d'une matrice de réponse du détecteur placé en transmission lorsque celui-ci est un détecteur spectrométrique (laquelle étape de calibrage peut être omise notamment si la réponse du détecteur est jugée satisfaisante, c'est-à-dire si la résolution en énergie du détecteur utilisé est particulièrement bonne), et une troisième étape de calibrage d'une matrice de réponse angulaire du système de détection, ces première, deuxième et troisième étapes préalables de calibrage pouvant être effectuées dans un ordre ou dans un autre, avant toute irradiation d'un objet à analyser, c'est-à-dire « *off-line* ».

L'invention s'étend à un système de détection apte à mettre en œuvre le procédé selon l'invention, et en particulier à un système de détection pour l'analyse d'un objet comprenant :

✔ une source de rayonnement photonique ;
✔ une zone de réception d'un objet à analyser ;
✔ des moyens de détection, en aval de la zone de réception d'objet, configurés pour l'acquisition d'un unique spectre énergétique, dit spectre en transmission mesuré, transmis par l'objet et pour l'acquisition d'un spectre énergétique, dit spectre en diffusion mesuré, diffusé par l'objet selon un seul angle de diffusion θ compris entre 1° et 15° ; ces moyens de détection comprenant un détecteur spectrométrique ;
✔ des moyens informatiques de traitement comprenant

♦ des moyens de détermination d'au moins une première caractéristique du matériau constitutif de l'objet à partir du spectre en transmission mesuré,
♦ des moyens de vérification d'au moins un critère de suspicion portant sur la première caractéristique précédemment déterminée pour l'objet et traduisant le fait que l'objet contient un matériau potentiellement suspect pour une application considérée, par comparaison de la première caractéristique telle que précédemment déterminée pour l'objet avec une plage de valeurs prédéfinie autour de matériaux recherchés eu égard à l'application concernée, ces moyens de vérification étant configurés pour déclencher l'utilisation des moyens suivants uniquement lorsque le critère de suspicion est réalisé ;
♦ des moyens de détermination d'une deuxième caractéristique de l'objet, à partir soit du spectre en diffusion mesuré, soit à la fois du spectre en diffusion mesuré et du spectre en transmission mesuré, et des moyens de comparaison à des caractéristiques de matériaux étalons mémorisées dans une base de données, soit de la deuxième caractéristique, soit des première et deuxième caractéristiques, aux fins d'identification d'un matériau constitutif de l'objet.

Selon un premier mode de réalisation possible, les moyens de détection comprennent, outre le détecteur spectrométrique précédemment défini, des moyens de positionnement pour le positionnement successif dudit détecteur spectrométrique en une position de transmission pour l'acquisition du spectre en transmission mesuré, et en une position de diffusion pour l'acquisition du spectre en diffusion mesuré. Selon un deuxième mode de réalisation possible, les moyens de détection comprennent, outre le détecteur spectrométrique précédemment défini, qui est alors placé en diffusion, un autre détecteur spectrométrique, placé en transmission.

Le système de détection selon l'invention présente de plus, de préférence, une ou plusieurs des caractéristiques suivantes :

✔ la première caractéristique est choisie parmi un coefficient d'atténuation à une ou plusieurs énergies prédéterminées ou sur une plage d'énergies prédéterminée, d'un matériau constitutif de l'objet, un numéro atomique effectif $Z_{eff}$ d'un matériau constitutif de l'objet, une indication quant à la nature d'un matériau constitutif de l'objet (première estimation de la nature du matériau -qui sera à confirmer à l'aide du spectre de diffusion dans la seconde partie du procédé- ou identification d'une famille ou d'un type de matériaux),
✔ la deuxième caractéristique est choisie parmi une signature de diffusion représentant des pics de Bragg ou une fonction d'interférence moléculaire, des transferts de quantité de mouvement.
✔ Les moyens informatiques de traitement sont aptes à mettre en œuvre une méthode basée sur une approche de type problème inverse et à estimer une matrice de réponse globale du système de détection.
✔ Les moyens informatiques de traitement sont aptes à estimer un spectre incident atténué par l'objet en utilisant le spectre en transmission mesuré.
✔ Les moyens informatiques de traitement sont aptes à construire une matrice de réponse globale du système de détection à partir d'un spectre incident atténué estimé, d'une matrice de résolution angulaire calibrée du système de détection ainsi que, éventuellement, d'une matrice de réponse calibrée du détecteur spectrométrique placé en diffusion, d'une matrice de réponse calibrée du détecteur spectrométrique placé en transmission.

✓ La source de rayonnement est polychromatique.

✓ La source de rayonnement est une source de rayons X.

✓ Le détecteur spectrométrique placé en diffusion est configuré de façon à présenter un axe de détection formant, avec un axe central du rayonnement incident, un angle de diffusion θ compris entre 1 ° et 10° et de préférence entre 1° et 5°.

✓ Le système de détection comprend un premier collimateur, dit collimateur de source, placé entre la source de rayonnement photonique et la zone de réception d'objet, de façon à collimater le rayonnement émis par la source en un faisceau incident d'axe central Z,

✓ Le système de détection comprend un deuxième collimateur, dit collimateur de diffusion, entre la zone de réception d'objet et le détecteur spectrométrique placé en diffusion, le collimateur de diffusion ayant un axe central de collimation formant un angle de diffusion θ avec l'axe central incident Z, lequel angle de diffusion θ est de préférence compris entre 1° et 5°.

✓ Le ou les détecteurs spectrométriques utilisés contiennent des capteurs à conversion directe, à savoir que les photons X incidents sur le capteur sont absorbés par un semi-conducteur (CdTe par exemple) et créent un nuage de charges électroniques (typiquement 10000 électrons pour un photon X de 60 keV). Ces charges sont ensuite collectées par des électrodes et forment un signal électrique transitoire appelé impulsion. Si la collecte est complète, l'intégrale de l'impulsion mesurée pour chaque particule détectée est proportionnelle à son énergie déposée dans le semi-conducteur. Un circuit électronique permet de mesurer cette intégrale. Après numérisation, les différentes mesures de photons de même énergie sont sommées, ce qui permet de reconstruire le spectre des rayonnements X ayant interagi avec l'objet irradié.

L'invention s'étend à un système de détection et à un procédé d'analyse d'un objet caractérisés en combinaison par tout ou partie des caractéristiques mentionnées ci-avant et ci-après.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

✓ La figure 1 est un graphique représentant les pics de Bragg du TNT (trinitrotoluène) et du sel (NaCl), lesquels pics illustrent l'intensité normalisée (axe des ordonnées), c'est-à-dire le nombre relatif de photons détectés au cours d'une opération d'acquisition, en fonction du transfert de quantité de mouvement x (axe des abscisses) en nm$^{-1}$ des photons détectés.

✓ La figure 2 est un graphique représentant la fonction d'interférence moléculaire normalisée de l'eau ($H_2O$), la fonction d'interférence moléculaire normalisée de l'eau oxygénée ($H_2O_2$), la fonction d'interférence moléculaire normalisée de l'acétone ($C_2H_6CO$), et la fonction d'interférence moléculaire normalisée du plexiglas® (($C_5O_2H_8$)n), avec, en ordonnées, le nombre de photons détectés et, en abscisses, le transfert de quantité de mouvement x en nm$^{-1}$.

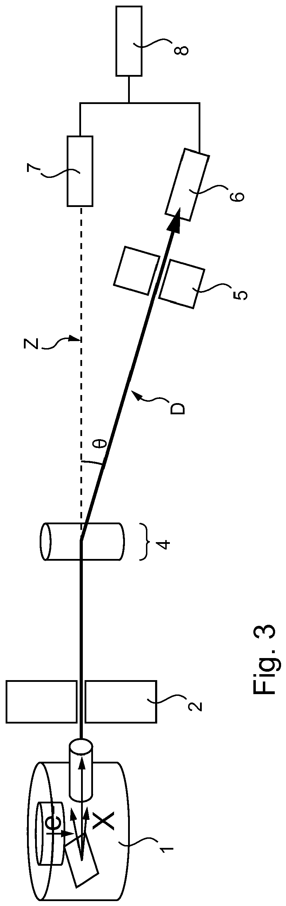

✓ La figure 3 est une vue schématique d'un système de détection selon l'invention.

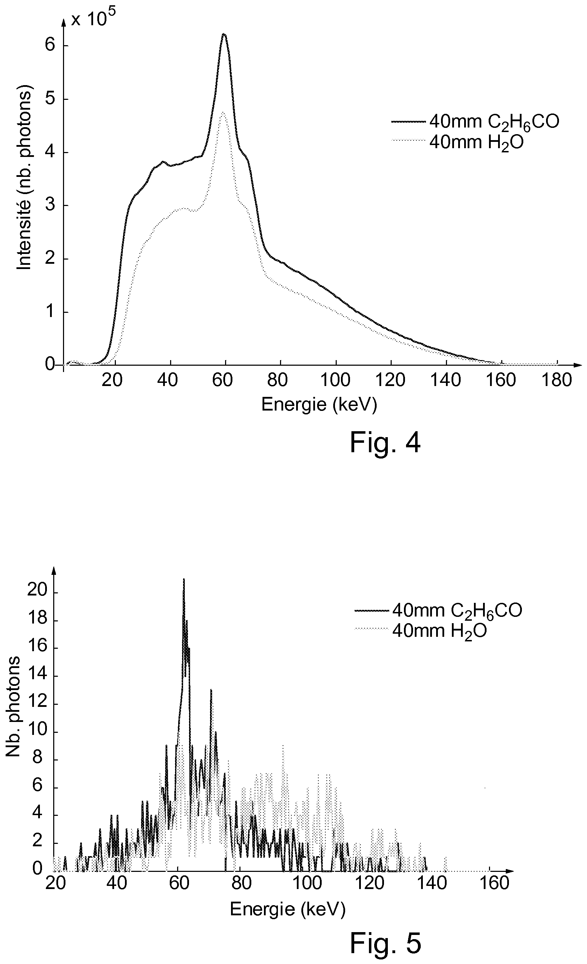

✓ La figure 4 est un graphique représentant des spectres en transmission pour des échantillons cylindriques de 40mm de diamètre d'eau ($H_2O$) et d'acétone ($C_2H_6CO$), tels que mesurés par le détecteur spectrométrique placé en transmission du système de détection de la figure 3.

✓ La figure 5 est un graphique représentant des spectres en diffusion pour des échantillons cylindriques de 40mm de diamètre d'eau ($H_2O$) et d'acétone ($C_2H_6CO$), tels que mesurés par le détecteur spectrométrique placé en diffusion du système de détection de la figure 3.

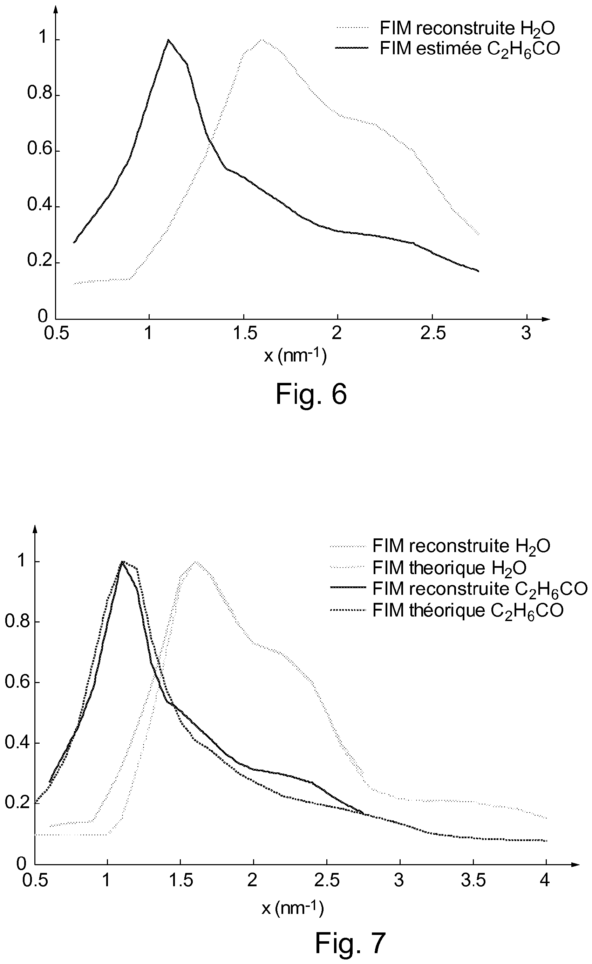

✓ La figure 6 est un graphique représentant la signature de diffusion (FIM estimée) d'un échantillon cylindrique d'eau de 40 mm de diamètre et celle d'un échantillon cylindrique d'acétone de 40 mm de diamètre, telles que reconstruites à partir d'un procédé et d'un système de détection selon l'invention,

✓ La figure 7 est un graphique représentant d'une part la signature de diffusion (« FIM reconstruite ») d'un échantillon cylindrique d'eau de 40 mm de diamètre et celle d'un échantillon cylindrique d'acétone de 40 mm de diamètre, telles que reconstruites à partir d'un procédé et d'un système de détection selon l'invention, et d'autres part les signatures de diffusion théoriques (« FIM théorique ») de ces échantillons,

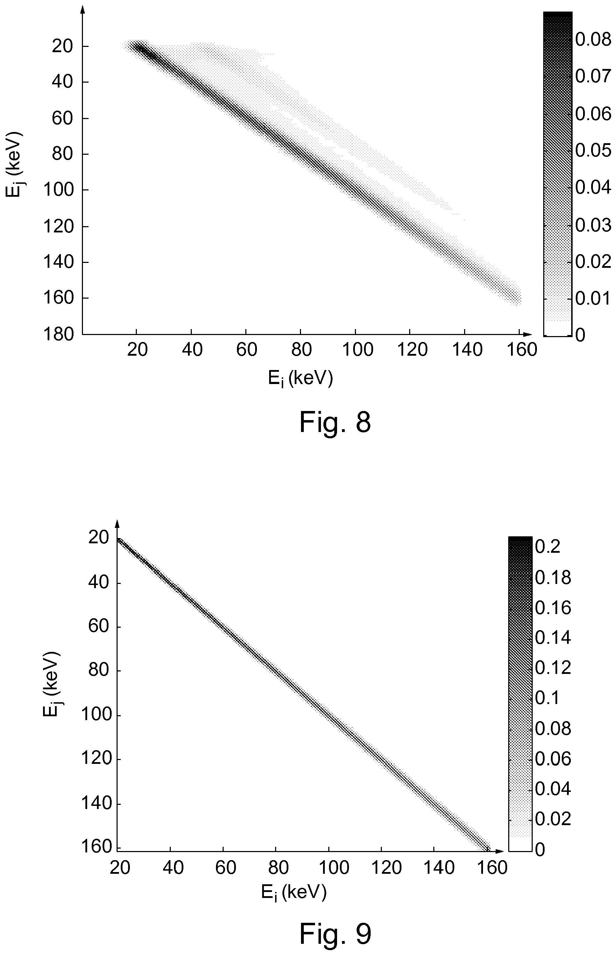

✓ La figure 8 est un graphique représentant une matrice de réponse du détecteur spectrométrique placé en transmission du système de détection de la figure 3.

✓ La figure 9 est un graphique représentant une matrice de réponse du détecteur spectrométrique placé en diffusion du système de détection de la figure 3.

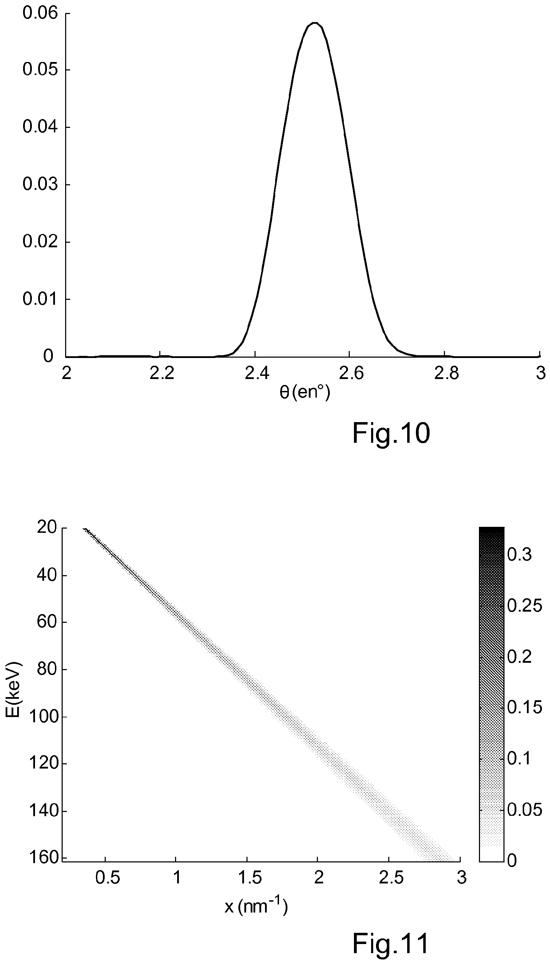

✓ La figure 10 est un graphique représentant la distribution angulaire du détecteur spectrométrique placé en diffusion du système de détection de la figure 3.

✓ La figure 11 est un graphique représentant une matrice de réponse angulaire du système de détection de la figure 3.

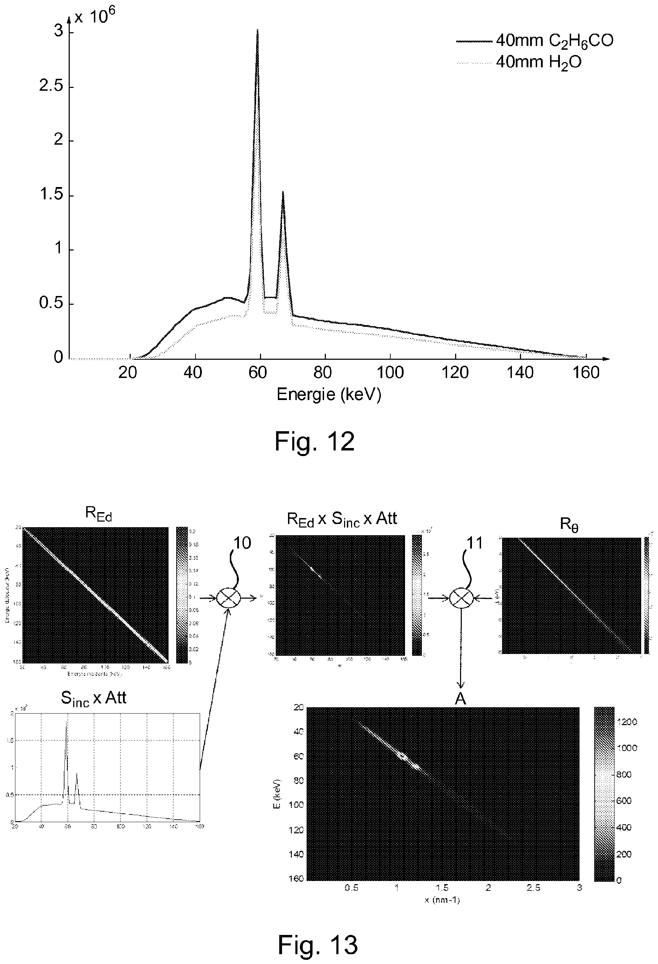

✓ la figure 12 est un graphique représentant des spectres incidents atténués estimés pour des échantillons cylindriques de 40mm de diamètre d'acétone et d'eau, tels qu'estimés selon l'invention à partir des spectres en transmission mesurés de la figure 4.

✓ La figure 13 est un digramme illustrant une opération de construction d'une matrice de réponse globale du système de détection de la figure 3.

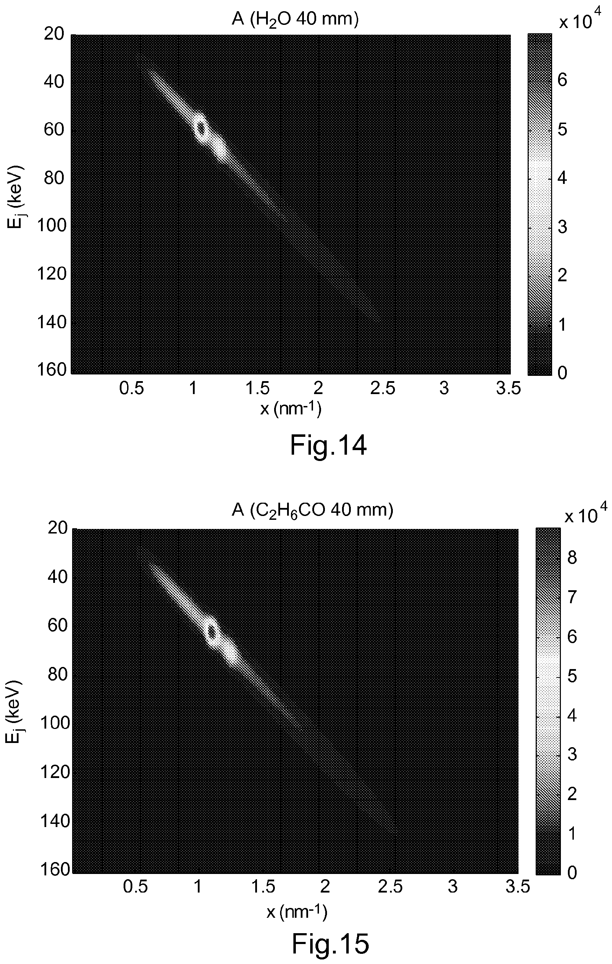

✓ la figure 14 est un graphique représentant la matrice de réponse globale A du système de détection de la figure 3 pour un échantillon cylindrique d'eau de 40 mm de diamètre.

✓ la figure 15 est un graphique représentant la matrice de réponse globale A du système de détection de la figure 3 pour un échantillon cylindrique d'acétone de 40 mm de diamètre.

Le système de détection selon l'invention illustré à la figure 3 comprend :

♦ une source 1 polychromatique de rayonnements ionisants, telle qu'un tube à rayons X,

♦ un collimateur de source 2, qui permet de canaliser les rayonnements de la source 1 en un faisceau incident d'axe central Z,

♦ une zone 4 de réception d'un objet à analyser,

♦ un collimateur de diffusion 5 ayant un axe de collimation D,

♦ un détecteur spectrométrique 6 placé en diffusion, associé au collimateur de diffusion 5 de sorte que le détecteur 6 détecte un rayonnement diffusé selon un angle de diffusion θ (angle entre l'axe incident Z et l'axe de collimation et de détection D) par exemple égal à 2,5° (l'échelle n'étant pas respectée sur la figure 3) ; le détecteur spectrométrique 6 placé en diffusion est apte à établir un spectre (énergétique) en diffusion mesuré, c'est-à-dire un spectre en énergie du rayonnement diffusé par l'objet selon la direction D ; le détecteur spectrométrique 6 est, en l'exemple, un détecteur à matériau semi-conducteur, tel un détecteur à CdTe ou CdZnTe ;

♦ un détecteur spectrométrique 7 placé en transmission, apte à établir un spectre (énergétique) en transmission mesuré, c'est-à-dire un spectre en énergie du rayonnement transmis par l'objet selon la direction Z ; le détecteur spectrométrique 7 placé en transmission est, en l'exemple, un détecteur à matériau semi-conducteur, tel un détecteur à CdTe ou CdZnTe ;

♦ des moyens informatiques 8 de traitement des spectres mesurés fournis par les détecteurs spectrométriques 6 et 7.

Les termes « rayonnement transmis » désignent le rayonnement constitué de photons n'ayant subi aucune interaction dans l'objet examiné. Par « spectre en transmission », on entend le spectre du rayonnement transmis selon l'axe du faisceau incident à l'objet, constitué par les photons qui n'ont subi aucune interaction dans l'objet. L'expression « placé en transmission » désigne un détecteur apte à détecter le rayonnement transmis par le matériau. Ainsi, un détecteur placé en transmission est situé sur l'axe du rayonnement incident à l'objet, l'objet étant placé entre le détecteur et la source de rayonnement.

Par « détecteur spectrométrique », on entend un détecteur apte à générer un spectre énergétique du rayonnement détecté.

Le procédé selon l'invention vise à déterminer si un objet à analyser est dangereux (explosif, tumeur...) ou non. Pour ce faire, le procédé se déroule en deux parties. L'objectif de la première partie du procédé n'est pas l'identification précise du matériau constitutif de l'objet ; cette première partie vise seulement à déterminer si l'objet est suspect ou non, c'est-à-dire à déterminer si l'objet mérite qu'une analyse plus poussée soit menée. Cette première partie permet ainsi d'écourter l'analyse pour un grand nombre d'objets qui s'avèrent manifestement inoffensifs.

Le procédé décrit ici a été mis en œuvre par les inventeurs pour étudier deux échantillons cylindriques de 40mm de diamètre constitués respectivement d'acétone ($C_2H_6CO$) et d'eau ($H_2O$).

Pour chaque échantillon inspecté, la première partie du procédé exploite un spectre en transmission mesuré tel que fourni par le détecteur spectrométrique 7, et dont le modèle direct est le suivant :

$$h = R_{Et} \cdot \left( S_{inc} \times Att \right)$$

Avec

- $h$ : le vecteur du spectre en transmission mesuré de taille ($Nb_{Ejt}$ x 1)
- $R_{Et}$ : la matrice de réponse du détecteur spectrométrique placé en transmission, de taille ($Nb_{Ejt}$ x $Nb_{Ei}$). Dans le cas d'un détecteur parfait, cette matrice est une matrice diagonale. Chaque terme $R_{Et}(j,i)$ de la matrice représente la probabilité de détection d'une valeur d'énergie égale à j lorsque le photon incident au détecteur a une énergie i.
- $S_{inc}$ : le vecteur du spectre incident du tube 1 à rayons X de taille (1 x $Nb_{Ei}$)
- $Att$ : le vecteur d'atténuation de taille (1 x $Nb_{Ei}$) qui prend en compte les effets d'atténuation dans l'objet.
- Le vecteur $(S_{inc}$ x $Att)$ représente le spectre de la source de rayonnement atténuée par l'objet. Dans l'exemple décrit ici, et qui fournit des signatures très précises, ce vecteur est pris en compte dans la construction d'une matrice de réponse globale A du système, comme on le comprendra plus loin.

- $Nb_{Ejt}$ et $Nb_{Ei}$ correspondent respectivement au nombre de canaux du spectre en transmission mesuré (c'est-à-dire au nombre de canaux du spectre de l'énergie détectée par le détecteur placé en transmission) et au nombre de canaux du spectre de l'énergie incidente.
- Le symbole *x* correspond à un produit terme à terme ($S_{inc}$ et *Att* sont multipliés terme à terme, on obtient alors un vecteur qui fait la même taille).
- Le symbole . correspond au produit matriciel classique.

Les spectres en transmission mesurés avec le détecteur spectrométrique 7 pour les échantillons d'acétone ($C_2H_6CO$) et d'eau ($H_2O$) susmentionnés peuvent être observés à la figure 4.

Plusieurs caractéristiques peuvent être extraites d'un tel spectre en transmission : coefficient d'atténuation, numéro atomique effectif $Z_{eff}$ d'un matériau constitutif de l'objet, une estimation de la nature, voire de la nature et, éventuellement, de l'épaisseur, d'un matériau constitutif de l'objet.

Le numéro atomique effectif $Z_{eff}$ du matériau peut par exemple être obtenu par une méthode statistique qui compare le spectre en transmission mesuré pour l'objet à des spectres d'échantillons de calibrage (matériaux étalons) mesurés dans les mêmes conditions expérimentales, et qui utilise un modèle physique d'évolution du spectre en fonction du numéro atomique effectif et de l'épaisseur du matériau. Cette technique est décrite dans la demande de brevet français N°1363174 d'Alexia Gorecki au nom du CEA, incorporée ici par référence.

Le spectre en transmission peut également être mis en œuvre pour estimer la nature du matériau examiné. L'estimation de la nature d'un matériau, ainsi qu'éventuellement son épaisseur, à partir d'un spectre en transmission est décrite dans les demandes WO2012000993 ou WO2011069748, au nom du CEA, incorporées ici par référence. Une fois cette ou ces caractéristiques de l'objet estimées, une décision est prise.

Si l'objet inspecté semble suspect, c'est-à-dire si un ou plusieurs critères de suspicion sont réalisés (numéro atomique appartenant à une plage de valeurs critique de matériaux potentiellement dangereux définie au préalable en fonction de l'application concernée), alors un spectre en diffusion du matériau sera acquis et étudié pour permettre une meilleure discrimination du matériau. Cette seconde partie n'est pas faite de façon systématique sur tous les matériaux car, bien que très discriminante, elle nécessite un temps d'exposition aux rayons X relativement long.

S'il n'y a aucun doute sur l'innocuité de l'objet, alors la première partie du procédé est menée sur un nouvel objet.

Le numéro atomique effectif des deux échantillons inspectés (eau et acétone) a été évalué à partir des spectres de la figure 4. Les résultats suivants ont été obtenus :

✓ pour l'échantillon d'eau : $Z_{eff}$ estimé = 7.21. En théorie, un tel échantillon possède un numéro atomique effectif : $Z_{eff}$ théorique = 7.22. On constate donc que le résultat obtenu est très proche de la valeur théorique de l'échantillon.

✓ Pour l'échantillon d'acétone : $Z_{eff}$ estimé = 6.05, pour un numéro atomique théorique $Z_{eff}$ théorique = 6.03.

Une zone critique a été définie pour cette application (détection d'explosifs) ; elle correspond à des matériaux dont le $Z_{eff}$ est entre 6 et 8.5. En d'autres termes, l'étape de vérification de la réalisation du critère de suspicion consiste à comparer le numéro atomique effectif déterminé, estimé à partir du spectre en transmission mesuré, à la plage de valeurs [6 ;8,5]. A noter que plusieurs zones critiques discontinues (plusieurs plages de valeurs) peuvent être définies pour une même première caractéristique (numéro atomique par ex.).

Il est également possible de définir plusieurs critères de suspicion portant sur des caractéristiques distinctes ; dans ce cas, on peut considérer soit que l'objet est suspect (et donc éligible pour la seconde partie du procédé) dès lors qu'au moins l'un de ces critères de suspicion est réalisé, soit que l'objet n'est suspect que si tous ces critères de suspicion sont réalisés.

Les deux échantillons inspectés ici (eau et acétone) ont des $Z_{eff}$ qui sont dans la zone critique ; ils sont donc considérés comme suspects et la deuxième partie du procédé selon l'invention, à savoir une étude de ces deux échantillons en diffusion petit angle, doit donc être exécutée.

La deuxième partie du procédé vise à identifier précisément le matériau constitutif de l'objet lorsque celui-ci a été considéré comme suspect à l'issue de la première partie. Cette deuxième partie consiste par exemple à fournir une signature en diffusion dudit matériau à partir d'un spectre en diffusion mesuré (fourni par le détecteur spectrométrique 6), les termes « *signature en diffusion* » désignant une fonction représentative du matériau et montrant des pics de diffusion (pics de Bragg ou Fonction d'Interférence Moléculaire selon la nature -cristalline ou amorphe- du matériau).

Les spectres en diffusion mesurés par le détecteur 6 pour les deux échantillons peuvent être observés à la figure 5. Dans l'exemple décrit ici, il a été choisi d'exploiter, de façon originale, les spectres en diffusion mesurés en combinaison avec les spectres en transmission mesurés au cours de la première partie du procédé. En variante, il est possible d'exploiter les spectres en diffusion mesurés de la figure 5 selon une autre technique telle une technique connue utilisée en EDXRD.

Dans l'exemple choisi ici, la deuxième partie du procédé utilise le modèle suivant, décrivant la relation entre la signature en diffusion $f$ du matériau et le spectre en diffusion mesuré $g$ :

$$g = \left(R_{Ed} \times S_{inc} \times Att\right) \cdot R_\theta \cdot f = A \cdot f$$

Avec

- $g$ : le vecteur du spectre en diffusion (cohérente) mesuré, de taille ($Nb_{Ejd}$ x 1)

- $R_{Ed}$ : matrice de réponse du détecteur spectrométrique placé en diffusion, de taille ($Nb_{Ejd}$ x $Nb_{Ei}$). Dans le cas d'un détecteur parfait, cette matrice est une matrice diagonale. Chaque terme $R_{Ed}(j,i)$ de la matrice représente la probabilité de détection d'une valeur d'énergie égale à j sachant que le rayonnement incident au détecteur a une énergie égale à i. D'une façon générale, la matrice de réponse d'un détecteur spectrométrique établit une relation probabiliste entre une énergie détectée par le détecteur et l'énergie du rayonnement incident à ce détecteur. Chaque colonne i de $R_{Ed}(j,i)$, avec j variant de 1 à $Nb_{Ejd}$, correspond à la densité de probabilité d'énergie détectée par le détecteur lorsque ce dernier est soumis à un rayonnement incident d'énergie i.

- $S_{inc}$ : vecteur du spectre incident du tube à rayons X de taille (1 x $Nb_{Ei}$)

- $Att$ : vecteur d'atténuation de taille (1 x $Nb_{Ei}$) qui prend en compte les effets d'atténuation dans l'objet. Du fait de la faible valeur de l'angle θ, inférieur à 15° et de préférence inférieur à 10° voire 5°, on fera l'approximation que l'atténuation par l'objet le long du trajet vers les deux détecteurs (en diffusion et en transmission) est la même.

- $R_\theta$ : matrice de réponse angulaire du système de détection, de taille ($Nb_{Ei}$ x $Nb_x$). Chaque terme $R_\theta(j,k)$ de la matrice $R_\theta$ correspond à une probabilité que l'énergie d'un photon détecté à l'énergie j corresponde à un transfert de quantité de mouvement égal à k. Autrement dit, $R_\theta(j, k)$ correspond à la probabilité qu'un transfert de quantité de mouvement k donne lieu à la détection d'un photon d'énergie j. Chaque colonne k $R_\theta(j,k)$, avec j variant de 1 à $Nb_{Ejd}$, correspond à la densité de probabilité d'énergie détectée par le détecteur lors d'un transfert de quantité de mouvement égal à k. D'une façon plus générale, la matrice de réponse angulaire $R_\theta$ permet d'établir une relation probabiliste entre l'énergie détectée par le détecteur placé en diffusion et un paramètre de diffusion élastique d'un matériau constituant l'objet, en particulier le transfert de quantité de mouvement.

- $f$ : signature en diffusion, de taille (1 x $Nb_x$), propre au matériau constituant l'objet, et qui permet de décrire soit les pics de Bragg théoriques du matériau dans le cas d'un matériau cristallin, soit la fonction d'interférence moléculaire dans le cas d'un matériau amorphe,

- $A$ : matrice de réponse globale du système en diffusion, de taille ($Nb_{Ejd}$ x $Nb_x$). Chaque terme A(j,k) de A correspond à une probabilité que l'énergie d'un photon détecté, par le détecteur en diffusion, à l'énergie j corresponde à un transfert de quantité de mouvement égal à k. Autrement dit, A(j,k) correspond à la probabilité qu'un transfert de quantité de mouvement k donne lieu à la détection d'un photon à l'énergie j.

- Le symbole $x$ correspond à un produit terme à terme ($S_{inc}$ et $Att$ sont multipliés terme à terme, on obtient alors un vecteur qui fait la même taille).

- Le symbole . correspond au produit matriciel classique.

- $Nb_{Ejd}$, $Nb_{Ei}$ et $Nb_x$ correspondent respectivement au nombre de canaux du spectre en diffusion mesuré (c'est-à-dire au nombre de canaux du spectre de l'énergie détectée par le détecteur placé en diffusion), au nombre de canaux du spectre de l'énergie incidente et au nombre de canaux du vecteur décrivant le transfert de quantité de mouvement.

A noter que le nombre de photons détectés dans chaque canal du vecteur $g$ suit une loi de Poisson de paramètre le nombre moyen de photons dans ce canal.

Le procédé selon l'invention comprend alors une opération de construction d'une matrice de réponse globale A du système de détection, utilisant le modèle ci-dessus. Pour ce faire, il convient au préalable de déterminer les termes $R_\theta$ et ($Sinc$ x $Att$), et éventuellement $R_{Ed}$.

Chacune de ces étapes est individuellement décrite plus loin.

L'étape préalable de calibrage de la matrice de réponse $R_{Ed}$ du détecteur spectrométrique placé en diffusion n'est pas nécessaire mais avantageuse, car elle prend en compte la dégradation des spectres du fait de la réponse du détecteur. Cependant, cette étape est optionnelle voire inutile, en particulier pour des détecteurs suffisamment résolus en énergie et lorsque la réponse d'un détecteur est jugée satisfaisante. Il en va de même pour la matrice de réponse $R_{Et}$ du détecteur spectrométrique placé en transmission, utilisée plus loin.

Une fois la matrice de réponse globale A construite à l'aide du modèle susmentionnée, le procédé selon l'invention reconstruit la signature $f$ (fonction d'interférence moléculaire pour les amorphes, distribution des $d_{hkl}$ pour les polycristallins) à partir du modèle $g = A \cdot f$ (où $A$ et $g$ sont alors connus) en mettant en œuvre une méthode basée sur une approche de type problème inverse.

L'algorithme Maximum Likelihood - Expectation Maximization (noté MLEM) se propose d'estimer le spectre à calculer par maximisation itérative de la fonction de log-vraisemblance. Ce type de calcul est très fréquent dès lors qu'il s'agit d'estimer un maximum de vraisemblance, et fait appel à un algorithme plus général, appelé Expectation - Maximization (EM). Cette méthode a l'avantage de prendre en compte la nature Poissonienne des données mesurées.

Les coefficients de la matrice de réponse globale A du système sont notés $a_{i,j}$. On veut maximiser la probabilité que l'estimée $f$ de dimension $Nb_x$ génère les mesures $g$. On sait de plus que les données mesurées obéissent à une statistique de Poisson, de par leur nature physique. On peut donc écrire la fonction de vraisemblance de l'estimée $f$:

$$\Pr(g/f) = \prod_{j=1}^{Nb_{Ejd}} \frac{e^{-\sum_{k=1}^{Nbx} a_{j,k} f_k} \left(\sum_{k=1}^{Nbx} a_{j,k} f_k\right)^{g_j}}{g_j!}$$

Sa log-vraisemblance s'exprime alors:

$$\Phi(f) = \log \Pr(g/f) = \sum_{j=1}^{Nb_{Ejd}} \left(-\sum_{k=1}^{Nbx} a_{j,k} f_k + g_j \log\left(\sum_{k=1}^{Nbx} a_{j,k} f_k\right)\right)$$

On cherche ensuite à maximiser cette fonction, en annulant sa dérivée :

$$f_k \frac{\partial \phi(f)}{\partial f_k} = 0$$

La résolution itérative de ce problème s'écrit alors :

$$f_k^{n+1} = f_k^n \frac{1}{\sum_{j=1}^{Nb_{Ejd}} a_{j,k}} \sum_{j=1}^{Nb_{Ejd}} \left(\frac{g_j a_{j,k}}{\sum_{k'=1}^{Nbx} a_{j,k'} f_{k'}^n}\right)$$

En initialisant le vecteur $f^{(0)}_k$ avec des valeurs positives, on a la garantie d'avoir des résultats non-négatifs.

Ainsi, à partir d'une estimation de $A$ et de la mesure de $g$, on peut reconstruire $f$ en itérant l'algorithme MLEM. Les résultats de cette reconstruction (notés « FIM reconstruite » sur la fig.6) pour les échantillons d'eau et d'acétone inspectés, en mettant en œuvre un algorithme MLEM avec 100 itérations, sont illustrés à la figure 6.

En d'autres termes, à partir de mesures réalisées en transmission et en diffusion sur un objet inconnu, on peut reconstruire une fonction relative à la structure d'un matériau constitutif de l'objet. Les valeurs de cette fonction sont représentées dans la matrice A.

Ce matériau étant inconnu, l'objectif est alors de l'identifier. Pour ce faire, on utilise un ensemble de matériaux étalons (de type explosifs et non explosifs dans le cas d'une application d'analyse de bagages par exemple ; de type tissus biologiques sains et tissus tumoraux dans le cas d'une application d'analyse médicale) dont les numéros atomiques effectifs ou autre première caractéristique et dont les signatures en diffusion (fonction d'interférence moléculaire ou pics de Bragg) ou autre seconde caractéristique sont tabulées et mémorisées dans une base de données, et le procédé d'analyse selon l'invention consiste ensuite à comparer les valeurs obtenues pour l'objet à analyser avec celles de la base de données, pour identifier l'objet inconnu.

En variante, certains paramètres permettant de remonter à des paramètres structurels du matériau sont extraits de la signature reconstruite pour l'objet ; par exemple, dans le cas d'un matériau cristallin, l'extraction de la position des pics présents dans la signature obtenue permet de remonter aux distances inter-réticulaires du cristal.

En comparant d'une part les valeurs de $Z_{eff}$ estimés à une base de valeurs de $Z_{eff}$ théoriques pour un ensemble de matériau et d'autre part la forme des fonctions d'interférence moléculaire reconstruites à une base de forme de fonctions d'interférence moléculaire pour un ensemble de matériaux, il est possible d'identifier la nature des deux échantillons analysés (eau et acétone). La figure 7 permet de comparer les fonctions d'interférence moléculaire reconstruites des deux échantillons analysés (eau et acétone) et leurs fonctions d'interférence moléculaire théoriques.

Sont maintenant décrites les diverses étapes de l'opération de construction de la matrice de réponse globale A du système.

Préalablement à toute analyse d'un objet, c'est-à-dire « *off-line* », des opérations de calibrage sont réalisées pour déterminer certaines spécifications du système de détection, qui dépendent notamment des détecteurs utilisés et de la géométrie du système, et qui, contrairement aux vecteurs d'atténuation, ne dépendent pas de l'objet à analyser. Ces spécifications sont $R_{Et}$, $R_{Ed}$, $R_\theta$ Elles sont ensuite mémorisées dans les moyens informatiques 8 de traitement.

La matrice de réponse $R_{Et}$ du détecteur spectrométrique 7 placé en transmission peut être obtenue à partir du logiciel de simulation Monte-Carlo Tasmania, qui permet de simuler toute la chaîne de détection d'un détecteur semi-conducteur (interactions photon, transit des porteurs de charges...). De préférence, cette simulation est de plus confrontée avec des données expérimentales acquises par exemple avec des sources gamma. Ceci permet d'ajuster la résolution en énergie obtenue en simulation.

La figure 8 montre la matrice de réponse $R_{Et}$ calibrée pour le détecteur spectrométrique 7 placé en transmission. Cette matrice définit la probabilité de détecter un photon à l'énergie Ej alors que l'énergie incidente du photon est Ei. Cette probabilité est indiquée sur la figure 8 par une nuance de gris (dont l'échelle est reportée à droite du graphique), l'axe des abscisses du graphique représentant l'énergie incidente Ei exprimée en keV, l'axe des ordonnées correspondant à l'énergie détectée Ej exprimée en keV. Dans le cas d'un détecteur parfait, la matrice est diagonale (si elle est carrée).

De façon similaire, une opération préalable de calibrage d'une matrice de réponse $R_{Ed}$ du détecteur spectrométrique 6 placé en diffusion est exécutée « *off-line* », par simulation à l'aide du logiciel de simulation Monte-Carlo et/ou par expérimentation.

La matrice de réponse calibrée $R_{Ed}$ obtenue est illustrée à la figure 9. Là encore, l'axe des abscisses représente l'énergie incidente Ei en keV, l'axe des ordonnées correspond à l'énergie détectée Ej en keV, la probabilité du couple (Ei, Ej) étant traduite par une nuance de gris.

Est aussi exécutée « *off-line* », une opération préalable de calibrage d'une matrice de réponse angulaire $R_\theta$ du système de détection. Cette réponse angulaire dépend de deux facteurs. Le premier correspond à la géométrie du système d'acquisition et plus précisément à l'ouverture du collimateur de source 2 et à l'ouverture du collimateur de diffusion 5, sachant qu'on suppose que l'objet remplit l'intersection de deux cônes, à savoir un cône d'irradiation et un cône d'observation. Le cône d'irradiation délimite l'angle solide sous lequel l'objet voit la source, tandis que le cône d'observation correspond à l'angle solide sous lequel le détecteur voit l'objet. On évalue tout d'abord une distribution angulaire 1D du système, soit à partir de simulations, soit à partir de calibrages. Utilisant la relation liant x (transfert de quantité de mouvement), E (énergie incidente au détecteur placé en diffusion) et θ (angle de diffusion), on déduit la matrice de réponse angulaire fonction de Ei (Energie incidente) et de *x* à partir de la distribution angulaire 1D fonction de θ.

La figure 10 montre un exemple de distribution angulaire 1D du système de diffusion lorsque l'axe de collimation D du collimateur de diffusion définit un angle de diffusion θ égal à 2,5°, la distribution angulaire exprimant la quantité relative de photons incidents au détecteur placé en diffusion (axe des ordonnées) en fonction de l'angle de détection en degré (axe des abscisses). Il s'agit d'un exemple car l'utilisation de collimateurs présentant des configurations différentes (en particulier largeur et longueur de l'ouverture des collimateurs) conduirait à l'obtention d'un autre graphique. Une matrice de réponse angulaire $R_\theta$ du système de détection peut être observée à la figure 11, dont l'axe des abscisses représente le transfert de quantité de mouvement x en nm$^{-1}$, tandis que l'axe des ordonnées représente l'énergie E incidente au détecteur placé en diffusion en keV, des nuances de gris traduisant la quantité relative de photons incidents. Comme précédemment évoqué, cette matrice définit une relation probabiliste entre le nombre de photons incidents au détecteur placé en diffusion, à une énergie donnée, et le transfert de quantité de mouvement.

La construction de la matrice de réponse globale A du système de détection utilisant le modèle $A = (R_{Ed} \times S_{inc} \times Att)\cdot R_\theta$ nécessite encore une étape d'estimation d'un spectre incident atténué par l'objet ($S_{inc}$ x *Att*).

Avantageusement, cette étape d'estimation du spectre incident atténué utilise à nouveau le spectre en transmission mesuré lors de la première partie du procédé par le détecteur spectrométrique 7 placé en transmission. Ce spectre en transmission h peut s'écrire :

$$h = R_{Et} \cdot \left( S_{inc} \times Att \right)$$

En d'autres termes, il est considéré dans cette version de l'invention que le terme ($S_{inc}$ x Att) dans l'expression de la matrice A est égal au terme ($S_{inc}$ x Att) dans l'expression du spectre en transmission h. Les inventeurs ont démontré que cette approximation est tout à fait acceptable pour une diffusion à de petits angles (inférieurs à 15°) et qu'elle permet d'obtenir des signatures f d'une résolution et d'une précision excellentes pour des angles de diffusion inférieurs à 5°.

Pour estimer ($S_{inc}$ x Att) à partir du spectre en transmission mesuré h et de la matrice réponse du détecteur $R_{Et}$ calibrée, le système selon l'invention utilise avantageusement à nouveau une technique de type MLEM.

La figure 12 montre les différents spectres ($S_{inc}$ x Att) obtenus après inversion MLEM des données expérimentales enregistrées sur le détecteur spectrométrique 7 placé en transmission pour les deux échantillons inspectés (eau et acétone), lesquelles données (spectres en transmission mesurés) sont illustrées à la figure 4.

Tous les termes de la matrice de réponse globale A du système ont été calibrés, le procédé selon l'invention pris en exemple consiste ensuite à les combiner selon la formule A = ($R_{Ed}$ × $S_{inc}$ × Att)·$R_{\theta}$. Cette combinaison est résumée à la figure 13 où la référence numérique 10 désigne une multiplication ligne à ligne et où la référence numérique 11 désigne une multiplication matricielle. Les matrices de réponse globale A obtenues peuvent être observées à la figure 14 pour l'échantillon d'eau et à la figure 15 pour l'échantillon d'acétone.

L'invention peut faire l'objet de nombreuses variantes vis-à-vis du mode de réalisation préférentiel précédemment décrit. Ainsi par exemple, la seconde partie du procédé peut consister en une analyse par diffractométrie classique utilisant la technique EDXRD par exemple.

## Revendications

1. Procédé d'analyse d'un objet dans le cadre d'une application donnée, **caractérisé en ce qu'**il se déroule en deux parties, à savoir une première partie comprenant les étapes suivantes :

   ✓ irradiation de l'objet par un rayonnement photonique incident,
   ✓ acquisition d'un unique spectre énergétique transmis par l'objet selon l'axe du rayonnement incident, dit spectre en transmission mesuré, à l'aide d'un détecteur spectrométrique placé en transmission,
   ✓ détermination d'au moins une première caractéristique d'un matériau constitutif de l'objet à partir du spectre en transmission mesuré,
   ✓ vérification de la réalisation d'au moins un critère, dit critère de suspicion, lequel critère de suspicion comprend au moins une plage de valeurs prédéfinie contenant des valeurs de la première caractéristique correspondant à des matériaux recherchés eu égard à l'application donnée, la vérification du critère de suspicion comprenant une étape de comparaison de la première caractéristique telle que précédemment déterminée pour l'objet avec ladite plage de valeurs prédéfinie,

   et une seconde partie exécutée uniquement lorsque le critère de suspicion est réalisé, laquelle seconde partie comprend :

   ✓ acquisition d'un spectre énergétique, dit spectre en diffusion mesurée, diffusé par l'objet selon un seul angle de diffusion (θ) compris entre 1° et 15° à l'aide d'un détecteur spectrométrique placé en diffusion,
   ✓ détermination d'une seconde caractéristique de l'objet à partir

      - soit du spectre en diffusion mesuré,
      - soit à la fois du spectre en diffusion mesuré et du spectre en transmission mesuré,

   ✓ comparaison

      - soit de la seconde caractéristique de l'objet,
      - soit à la fois des première et seconde caractéristiques de l'objet,
      avec des caractéristiques de matériaux étalons mémorisées dans une base de données, aux fins d'identification d'un matériau constitutif de l'objet.

2. Procédé d'analyse selon la revendication 1, **caractérisé en ce que** la première caractéristique est choisie parmi un coefficient d'atténuation pour une ou plusieurs énergies prédéterminées ou pour une plage d'énergies prédéterminée, une indication quant à la nature du matériau constitutif de l'objet, un numéro atomique effectif.

**3.** Procédé d'analyse selon l'une des revendications précédentes, **caractérisé en ce que** la deuxième caractéristique est choisie parmi un transfert de quantité de mouvement et une fonction (*f*), dite signature en diffusion, représentative de l'objet et montrant des pics de diffusion, reconstruite à partir à la fois du spectre en diffusion mesuré et du spectre en transmission mesuré.

**4.** Procédé d'analyse selon la revendication 3, **caractérisé en ce que** la reconstruction de la signature en diffusion de l'objet met en œuvre une méthode basée sur une approche de type problème inverse et comprend une opération de construction d'une matrice de réponse globale (A) du système de détection, laquelle matrice de réponse globale (A) établit une relation entre une énergie détectée par le détecteur placé en diffusion et un transfert de quantité de mouvement dans l'objet.

**5.** Procédé d'analyse selon la revendication 4, **caractérisé en ce que** l'opération de construction de la matrice de réponse globale (A) du système de détection est faite à partir d'un spectre incident atténué estimé (*Sinc x Att*) et d'une matrice de réponse angulaire calibrée ($R_\theta$) du système de détection.

**6.** Procédé d'analyse selon la revendication 5, **caractérisé en ce que** l'opération de construction de la matrice de réponse globale (A) du système de détection est faite à partir, de plus, d'une matrice de réponse ($R_{Ed}$) du détecteur spectrométrique placé en diffusion (6) et d'une matrice de réponse ($R_{Et}$) du détecteur spectrométrique placé en transmission (7).

**7.** Système de détection pour l'analyse d'un objet dans le cadre d'une application donnée, comprenant :

✓ une source (1) de rayonnement photonique,
✓ une zone (4) pour la réception d'un objet à analyser,
✓ des moyens de détection (6, 7), en aval de la zone de réception d'objet (4), configurés pour l'acquisition d'un unique spectre énergétique, dit spectre en transmission mesuré, transmis par l'objet selon l'axe du rayonnement incident et pour l'acquisition d'un spectre énergétique, dit spectre en diffusion mesuré, diffusé par l'objet selon un seul angle de diffusion θ compris entre 1° et 15° ; ces moyens de détection comprenant un détecteur spectrométrique (6).
✓ des moyens informatiques (8) de traitement comprenant

♦ des moyens de détermination d'au moins une première caractéristique d'un matériau constitutif de l'objet à partir du spectre en transmission mesuré,
♦ des moyens de vérification de la réalisation d'au moins un critère de suspicion portant sur la première caractéristique de l'objet, ces moyens de vérification étant configurés pour effectuer une comparaison de la première caractéristique telle que précédemment déterminée pour l'objet avec une plage de valeurs prédéfinie contenant des valeurs de la première caractéristique correspondant à des matériaux recherchés eu égard à l'application donnée, ces moyens de vérification étant configurés pour déclencher l'utilisation des moyens suivants uniquement lorsque le critère de suspicion est réalisé,
♦ des moyens de détermination d'une deuxième caractéristique de l'objet à partir soit du spectre en diffusion mesuré, soit à la fois du spectre en diffusion mesuré et du spectre en transmission mesuré,
♦ et des moyens de comparaison à des caractéristiques de matériaux étalons mémorisées dans une base de données, soit de la seconde caractéristique de l'objet, soit des première et seconde caractéristiques de l'objet, aux fins d'identification d'un matériau constitutif de l'objet.

**8.** Système de détection selon la revendication 7, **caractérisé en ce que** le détecteur spectrométrique (6) est placé en diffusion et les moyens de détection comprennent de plus un autre détecteur spectrométrique (7), placé en transmission.

**9.** Système de détection selon la revendication 7, **caractérisé en ce que** les moyens de détection comprennent de plus des moyens de positionnement pour le positionnement successif du détecteur spectrométrique (6) en position de transmission, pour l'acquisition du spectre en transmission mesuré, et en une position de diffusion pour l'acquisition du spectre en diffusion mesuré.

**10.** Système de détection selon l'une des revendications 7 à 9, **caractérisé en ce que** :

✓ la première caractéristique est choisie parmi un coefficient d'atténuation pour une ou plusieurs énergies ou pour une plage d'énergies prédéterminée, une indication quant à la nature du matériau constitutif de l'objet, un numéro atomique effectif, et

✓ la deuxième caractéristique est choisie parmi un transfert de quantité de mouvement et une fonction ($f$), dite signature en diffusion, représentative de l'objet et montrant des pics de diffusion, reconstruite à partir à la fois du spectre en diffusion mesuré et du spectre en transmission mesuré.

**11.** Système de détection selon l'une des revendications 7 à 10, **caractérisé en ce que** les moyens informatiques (8) de traitement sont configurés pour mettre en œuvre une méthode basée sur une approche de type problème inverse et pour construire une matrice de réponse globale (A) du système de détection, laquelle matrice de réponse globale (A) établit une relation entre une énergie détectée par le détecteur placé en diffusion et un transfert de quantité de mouvement dans l'objet, la matrice de réponse globale (A) étant construite à partir d'un spectre incident atténué (*Sinc x Att*) estimé en utilisant le spectre en transmission mesuré, et d'une matrice de réponse angulaire calibrée ($R_\theta$) du système de détection.

**12.** Système de détection selon l'une des revendications 7 à 11, **caractérisé en ce que** le détecteur spectrométrique (6) placé en diffusion est configuré de façon à présenter un axe de détection (D) formant, avec un axe central (Z) du rayonnement incident, un angle de diffusion $\theta$ compris entre 1° et 5°.

**Patentansprüche**

**1.** Verfahren zur Analyse eines Objekts im Rahmen einer gegebenen Anwendung, **dadurch gekennzeichnet, dass** es in zwei Teilen abläuft, nämlich einem ersten Teil, der die folgenden Schritte umfasst:

✓ Bestrahlen des Objekts mit einer einfallenden Photonenstrahlung,

✓ Erfassen eines einzelnen Energiespektrums, gemessenes Transmissionsspektrum genannt, das von dem Objekt entlang der Achse der einfallenden Strahlung übertragen wird, mittels eines auf Transmission gesetzten spektrometrischen Detektors,

✓ Bestimmen von zumindest einem ersten Merkmal eines das Objekt bildenden Materials ausgehend von dem gemessenen Transmissionsspektrum,

✓ Überprüfen der Erfüllung mindestens eines Kriteriums, Verdachtskriterium genannt, wobei das Verdachtskriterium mindestens einen vordefinierten Wertebereich umfasst, der Werte des ersten Merkmals enthält, die den in Bezug auf die gegebene Anwendung angestrebten Materialien entsprechen, wobei das Überprüfen des Verdachtskriteriums einen Schritt des Vergleichens des ersten Merkmals, wie es zuvor für das Objekt bestimmt wurde, mit dem vordefinierten Wertebereich umfasst,

und einem zweiten Teil, der nur dann ausgeführt wird, wenn das Verdachtskriterium erfüllt ist, wobei der zweite Teil umfasst:

✓ Erfassen eines Energiespektrums, gemessenes Streuspektrum genannt, das von dem Objekt unter einem einzigen Streuwinkel ($\theta$) zwischen 1° und 15° gestreut wird, mittels eines auf Streuung gesetzten spektrometrischen Detektors,

✓ Bestimmen eines zweiten Merkmals des Objekts ausgehend von

- entweder dem gemessenen Streuspektrum,
- oder zugleich von dem gemessenen Streuspektrum und dem gemessenen Transmissionsspektrum,

✓ Vergleichen

- entweder des zweiten Merkmals des Objekts,
- oder zugleich des ersten und des zweiten Merkmals des Objekts,

mit Merkmalen von Standardmaterialien, die in einer Datenbank abgespeichert sind, um ein das Objekt bildendes Material zu identifizieren.

**2.** Analyseverfahren nach Anspruch 1, **dadurch gekennzeichnet, dass** das erste Merkmal ausgewählt ist aus einem Schwächungskoeffizienten für eine oder mehrere vorbestimmte Energien oder für einen vorbestimmten Energiebereich, einer Angabe über die Beschaffenheit des das Objekt bildenden Materials, einer effektiven Ordnungszahl.

3. Analyseverfahren nach einem der vorangehenden Ansprüche, **dadurch gekennzeichnet, dass** das zweite Merkmal ausgewählt ist aus einem Impulsaustausch und einer Funktion ($f$), Streusignatur genannt, die repräsentativ ist für das Objekt und Streuspitzen zeigt und die zugleich aus dem gemessenen Streuspektrum und aus dem gemessenen Transmissionsspektrum rekonstruiert wird.

4. Analyseverfahren nach Anspruch 3, **dadurch gekennzeichnet, dass** die Rekonstruktion der Streusignatur des Objekts ein Verfahren anwendet, das auf einem Ansatz vom Typ inverses Problem basiert, und eine Operation zum Erstellen einer globalen Reaktionsmatrix (A) des Detektionssystems umfasst, wobei die globale Reaktionsmatrix (A) eine Beziehung zwischen einer von dem auf Streuung gesetzten Detektor erfassten Energie und einem Impulsaustausch in dem Objekt herstellt.

5. Analyseverfahren nach Anspruch 4, **dadurch gekennzeichnet, dass** die Operation zum Erstellen der globalen Reaktionsmatrix (A) des Detektionssystems ausgehend von einem geschätzten abgeschwächten Einfallsspektrum ($Sinc \times Att$) und einer kalibrierten Winkelreaktionsmatrix ($R_\theta$) des Detektionssystems erfolgt.

6. Analyseverfahren nach Anspruch 5, **dadurch gekennzeichnet, dass** die Operation zum Erstellen der globalen Reaktionsmatrix (A) des Detektionssystems ferner ausgehend von einer Reaktionsmatrix ($R_{Ed}$) des auf Streuung gesetzten spektrometrischen Detektors (6) und einer Reaktionsmatrix ($R_{Et}$) des auf Transmission gesetzten spektrometrischen Detektors (7) erfolgt.

7. Detektionssystem zur Analyse eines Objekts im Rahmen einer gegebenen Anwendung, enthaltend:

   ✓ eine Photonenstrahlungsquelle (1),
   ✓ einen Bereich (4) zum Aufnehmen eines zu analysierenden Objekts,
   ✓ Detektionsmittel (6, 7), die dem Objektaufnahmebereich (4) nachgelagert sind und für die Erfassung eines einzelnen Energiespektrums, gemessenes Transmissionsspektrum genannt, das von dem Objekt entlang der Achse der einfallenden Strahlung übertragen wird, und für die Erfassung eines Energiespektrums, gemessenes Streuspektrum genannt, das von dem Objekt unter einem einzigen Streuwinkel θ zwischen 1° und 15° gestreut wird, ausgelegt sind, wobei diese Detektionsmittel einen spektrometrischen Detektor (6) enthalten,
   ✓ Datenverarbeitungsmittel (8), enthaltend

   ♦ Mittel zum Bestimmen von zumindest einem ersten Merkmal eines das Objekt bildenden Materials ausgehend von dem gemessenen Transmissionsspektrum,
   ♦ Mittel zum Überprüfen der Erfüllung mindestens eines Verdachtskriteriums in Bezug auf das erste Merkmal des Objekts, wobei diese Überprüfungsmittel dazu ausgelegt sind, um einen Vergleich des ersten Merkmals, wie es zuvor für das Objekt bestimmt wurde, mit einem vordefinierten Wertebereich durchzuführen, der Werte des ersten Merkmals enthält, die den in Bezug auf die gegebene Anwendung angestrebten Materialien entsprechen, wobei diese Überprüfungsmittel dazu ausgelegt sind, um die Verwendung der folgenden Mittel nur dann auszulösen, wenn das Verdachtskriterium erfüllt ist,
   ♦ Mittel zum Bestimmen von einem zweiten Merkmal des Objekts entweder ausgehend von dem gemessenen Streuspektrum oder zugleich von dem gemessenen Streuspektrum und von dem gemessenen Transmissionsspektrum,
   ♦ und Mittel zum Vergleichen entweder des zweitens Merkmal des Objekts oder des ersten und des zweiten Merkmal des Objekts mit Merkmalen von in einer Datenbank abgespeicherten Standardmaterialien, um ein das Objekt bildendes Material zu identifizieren.

8. Detektionssystem nach Anspruch 7, **dadurch gekennzeichnet, dass** der spektrometrische Detektor (6) auf Streuung gesetzt ist und die Detektionsmittel ferner einen weiteren spektrometrischen Detektor (7) enthalten, der auf Transmission gesetzt ist.

9. Detektionssystem nach Anspruch 7, **dadurch gekennzeichnet, dass** die Detektionsmittel ferner Positionierungsmittel zum aufeinanderfolgenden Positionieren des spektrometrischen Detektors (6) in eine Transmissionsposition zum Erfassen des gemessenen Transmissionsspektrums, sowie in eine Streuungsposition zum Erfassen des gemessenen Streuspektrums enthalten.

10. Detektionssystem nach einem der Ansprüche 7 bis 9,

**dadurch gekennzeichnet, dass**

✓ das erste Merkmal ausgewählt ist aus einem Schwächungskoeffizienten für eine oder mehrere Energien oder für einen vorbestimmten Energiebereich, einer Angabe über die Beschaffenheit des das Objekt bildenden Materials, einer effektiven Ordnungszahl, und
✓ das zweite Merkmal ausgewählt ist aus einem Impulsaustausch und einer Funktion (*f*), Streusignatur genannt, die repräsentativ ist für das Objekt und Streuspitzen zeigt und die zugleich aus dem gemessenen Streuspektrum und aus dem gemessenen Transmissionsspektrum rekonstruiert wird.

11. Detektionssystem nach einem der Ansprüche 7 bis 9, **dadurch gekennzeichnet, dass** die Datenverarbeitungsmittel (8) dazu ausgelegt sind, ein Verfahren anzuwenden, das auf einem Ansatz vom Typ inverses Problem basiert, und eine globale Reaktionsmatrix (A) des Detektionssystems zu erstellen, wobei die globale Reaktionsmatrix (A) eine Beziehung zwischen einer von dem auf Streuung gesetzten Detektor erfassten Energie und einem Impulsaustausch in dem Objekt herstellt, wobei die globale Reaktionsmatrix (A) ausgehend von einem unter Verwendung des gemessenen Transmissionsspektrums geschätzten abgeschwächten Einfallsspektrum (*Sinc x Att*) und einer kalibrierten Winkelreaktionsmatrix ($R_\theta$) des Detektionssystems erstellt wird.

12. Detektionssystem nach einem der Ansprüche 7 bis 11, **dadurch gekennzeichnet, dass** der auf Streuung gesetzte spektrometrische Detektor (6) so ausgelegt ist, dass er eine Detektionsachse (D) aufweist, die mit einer Mittelachse (Z) der einfallenden Strahlung einen Streuwinkel θ zwischen 1° und 5° einschließt.

**Claims**

1. A method of analyzing an object in the context of a given application, **characterized in that** it is conducted in two parts, that is to say a first part comprising the following steps:

   ✓ irradiating the object by incident photon radiation,
   ✓ acquiring a unique energy spectrum transmitted by the object along the incident radiation axis, referred to as measured transmission spectrum, using a spectrometric detector placed for transmission,
   ✓ determining at least a first characteristic of a material constituting the object based on the measured transmission spectrum,
   ✓ verifying that at least one criterion, referred to as suspicion criterion, is met, which suspicion criterion comprises at least one predefined range of values containing values of the first characteristic corresponding to materials searched for having regard to the given application, the verifying of the suspicion criterion comprising a step of comparing the first characteristic as previously determined for the object with said predefined range of values,

   and a second part carried out solely when the suspicion criterion is met, which second part comprises:

   ✓ acquiring an energy spectrum, referred to as measured scattering spectrum, scattered by the object at a single scattering angle (θ) comprised between 1° and 15° using a spectrometric detector placed for scattering,
   ✓ determining a second characteristic of the object based

      - either on the measured scattering spectrum,
      - or both on the measured scattering spectrum and on the measured transmission spectrum,

   ✓ comparing

      - either the second characteristic of the object,
      - or both the first and second characteristics of the object,
      with characteristics of calibration materials stored in a database, for the purposes of identifying a material constituting the object.

2. An analyzing method according to claim 1, **characterized in that** the first characteristic is chosen from an attenuation coefficient for one or more predetermined energies or for a predetermined range of energies, an indication as to the nature of the material constituting the object, and an effective atomic number.

3. An analyzing method according to one of the preceding claims, **characterized in that** the second feature is chosen from a momentum transfer and a function (*f*), referred to as scattering signature, representative of the object and presenting scattering peaks, reconstructed from both the measured scattering spectrum and from the measured transmission spectrum.

4. An analyzing method according to claim 3, **characterized in that** reconstructing the scattering signature of the object implements a method based on an inverse problem type approach and comprises an operation of constructing an overall response matrix (A) of the detection system, which overall response matrix (A) establishes a relation between an energy detected by the detector placed for scattering and a momentum transfer in the object.

5. An analyzing method according to claim 4, **characterized in that** the operation of constructing the overall response matrix (A) of the detection system is carried out on the basis of an estimated attenuated incident spectrum (*Sinc x Att*) and a calibrated angular response matrix ($R_\theta$) of the detection system.

6. An analyzing method according to claim 5, **characterized in that** the operation of constructing the overall response matrix (A) of the detection system is carried out on the basis, furthermore, of a response matrix ($R_{Ed}$) of the spectrometric detector placed for scattering (6) and of a response matrix ($R_{Et}$) of the spectrometric detector (7) placed for transmission.

7. A detection system for analyzing an object in the context of a given application, comprising:

✓ a source (1) of photon radiation,
✓ a zone (4) for the reception of an object to analyze,
✓ detection means (6, 7), downstream of the object receiving zone (4), for acquiring a unique energy spectrum, referred to as measured transmission spectrum, transmitted by the object along the axis of the incident radiation and for acquiring an energy spectrum, referred to as measured scattering spectrum, scattered by the object at a single scattering angle θ comprised between 1° and 15°; these detection means comprising a spectrometric detector (6).
✓ computer processing means (8) comprising

♦ means for determining at least a first characteristic of a material constituting the object based on the measured transmission spectrum,
♦ means for verifying the meeting of at least one suspicion criterion concerning the first characteristic of the object, these verifying means being configured to perform a comparison of the first characteristic as previously determined for the object with a predefined range of values containing values of the first characteristic corresponding to materials searched for having regard to the given application, these verifying means being configured to trigger the use of the following means solely when the suspicion criterion is met,
♦ means for determining a second characteristic of the object based either on the measured scattering spectrum, or both on the measured scattering spectrum and on the measured transmission spectrum,
♦ and means for comparing with characteristics of calibration materials stored in a database, either for the second characteristic the object, or for the first and second characteristics of the object, for the purposes of identifying a material constituting the object.

8. A detection system according to claim 7, **characterized in that** the spectrometric detector (6) is placed for scattering and the detection means furthermore comprise another spectrometric detector (7), placed for transmission.

9. A detection system according to claim 7, **characterized in that** the detection means furthermore comprise positioning means for the successive positioning of the spectrometric detector (6) in a position for transmission, for acquiring the measured transmission spectrum, and in a position for scattering for acquiring the measured scattering spectrum.

10. A detection system according to one of claims 7 to 9, **characterized in that**:

✓ the first characteristic is chosen from a coefficient of attenuation for one or more energies or for a predetermined range of energies, an indication as to the nature of the material constituting the object, an effective atomic number, and
✓ the second characteristic is chosen from a momentum transfer and a function (*f*), referred to as scattering signature, representative of the object and showing scattering peaks, reconstructed from both the measured scattering spectrum and the measured transmission spectrum.

**11.** A detection system according to one of claims 7 to 10, **characterized in that** the computer processing means (8) are configured to implement a method based on an inverse problem type approach and for constructing an overall response matrix (A) of the detection system, which overall response matrix (A) establishes a relationship between an energy detected by the detector placed for scattering and a momentum transfer in the object, the overall response matrix (A) being constructed from an attenuated incident spectrum (*Sinc x Att*) estimated using the measured transmission spectrum, and from a calibrated angular response matrix ($R_\theta$) of the detection system.

**12.** A detection system according to one of claims 7 to 11, **characterized in that** the spectrometric detector (6) placed for scattering is configured so as to present a detection axis (D) forming, with a central axis (Z) of the incident radiation, a scattering angle $\theta$ comprised between 1° and 5°.

Fig. 1

Fig. 2

Fig. 3

Fig. 4

Fig. 5

Fig. 6

Fig. 7

Fig. 8

Fig. 9

Fig.10

Fig.11

Fig. 12

Fig. 13

A (H₂O 40 mm)

Fig.14

A (C₂H₆CO 40 mm)

Fig.15

## RÉFÉRENCES CITÉES DANS LA DESCRIPTION

**Documents brevets cités dans la description**

- WO 2007068933 A
- WO 2006075296 A
- FR 1363174
- WO 2012000993 A
- WO 2011069748 A

**Littérature non-brevet citée dans la description**

- **PANI, S. et al.** Characterization of breast tissue using energy-dispersive X-ray diffraction computed tomography. *Applied Radiation and Isotopes,* 2010, vol. 68 (10), 1980-1987